# EUROPEAN PATENT APPLICATION

(11) **EP 4 819 304 A1**
(43) Date of publication of application: **07.10.2026**
(21) Application number: 24923232.3
(22) Date of filing: 02.08.2024
(51) Int. Cl.: H01M 10/6556

(54) **HEAT EXCHANGE MEMBER, BATTERY, AND ELECTRICAL DEVICE**

(30) Priority: 06.02.2024 CN 202420286809 U
(71) Applicant: Contemporary Amperex Technology Co., Limited, Ningde, Fujian 352100 (CN)
(72) Inventor: SONG, Feiting, Ningde, Fujian 352100 (CN); HUANG, Xiaoteng, Ningde, Fujian 352100 (CN); HOU, Yuepan, Ningde, Fujian 352100 (CN)
(74) Representative: Lorenz Seidler Gossel Part. mbB
(86) International application number: PCT/CN2024/109651
(87) International publication number: WO 2025/167019

(57) **Abstract**

A heat exchange member (100), a battery (1000), and an electrical device. The heat exchange member (100) comprises: a plurality of connecting tubes (10), arranged at intervals; a current collector (20), having an inlet (201) and an outlet (202), wherein the inlet (201) is used for inputting a medium, the outlet (202) is used for outputting a medium, the current collector (20) is connected to and communicated with each connecting tube (10), the current collector (20) and the plurality of connecting tubes (10) jointly form a plurality of liquid flow paths arranged in parallel, and each liquid flow path extends from the inlet (201) to the outlet (202); and a reinforcing member (30), provided on the current collector (20) and configured to enhance the strength of the current collector (20).

## Description

### CROSS-REFERENCE TO RELATED APPLICATION

The present application claims priority to Chinese Patent Application No. 202420286809.4, filed by Contemporary Amperex Technology Co., Limited (CATL) on February 06, 2024, the content of which is incorporated herein by reference in its entirety.

### TECHNICAL FIELD

The present application relates to the technical field of batteries, and in particular, to a heat exchange member, a battery, and an electric device.

### BACKGROUND

The structural strength of the heat exchange member has a significant impact on the service life and the risk of air tightness failure of the heat exchange member. Therefore, how to effectively improve the structural strength of the heat exchange member has become a research and development focus in the art.

### SUMMARY

Embodiments of the present application provide a heat exchange member, a battery, and an electric device, which improve the overall structural strength of the heat exchange member, thereby improving the reliability of the battery and the electric device.

In a first aspect, the embodiments of the present application provide a heat exchange member. The heat exchange member includes: a plurality of connecting tubes, spaced apart from each other; a manifold provided with an inlet and an outlet, where the inlet is configured to input a medium, the outlet is configured to output the medium, the manifold is connected to and in communication with each of the connecting tubes, and the manifold and the plurality of connecting tubes jointly form a plurality of liquid flow paths arranged in parallel, each of the liquid flow paths flowing from the inlet to the outlet; and a reinforcing member, disposed on the manifold and configured to reinforce a strength of the manifold.

In the above technical solutions, by providing the reinforcing member capable of reinforcing the strength of the manifold, the manifold is less prone to deformation, collapse, or other problems during assembly and use, thereby reducing the risk of air tightness failure and improving the overall structural strength and the service life of the heat exchange member.

In some embodiments, the manifold and the connecting tube are both connected to the reinforcing member.

In the above technical solutions, the reinforcing member can reinforce the strength of the manifold and the connecting tube. In addition, compared with the manifold, the structural design of the reinforcing member is more flexible, thereby making it easier to achieve the connection between the reinforcing member and the connecting tube, and improving the connection reliability and the sealing performance. Therefore, the reinforcing member connecting the connecting tube and the manifold is beneficial to reducing the risk of connection and sealing failure of the connecting tube.

In some embodiments, the reinforcing member is disposed outside the manifold, and at least part of the reinforcing member is attached to an outer surface of the manifold.

In the above technical solutions, the reinforcing member is disposed outside the manifold, which facilitates the assembly of the reinforcing member and the manifold and is not affected by the size of an internal space of the manifold; and in addition, at least part of the reinforcing member is attached to the outer surface of the manifold, which can increase the overall thickness of the attached region, thereby effectively improving the strength.

In some embodiments, the manifold is provided with a first opening, the reinforcing member is provided with a second opening opposite to the first opening, and a peripheral edge of the second opening is provided with a connecting flange. The connecting tube is provided in the first opening and the second opening in a penetrating manner, and the connecting tube is connected to an inner peripheral surface of the connecting flange.

In the above technical solutions, by providing the connecting flange, a contact area, such as a welding area, between the reinforcing member and the connecting tube can be increased, thereby improving the connection reliability and the sealing reliability.

In some embodiments, the connecting flange is provided in the first opening in a penetrating manner.

In the above technical solutions, the connecting flange being provided in the first opening in a penetrating manner can reduce an occupied space in the thickness direction of a plate, and improve the reinforcing effect of the reinforcing member on the strength of the manifold, particularly the strength near the first opening; and in addition, the connecting flange can separate the wall surface of the first opening from the connecting tube, making a weak sealing region less likely to form.

In some embodiments, an outer peripheral surface of the connecting flange is attached to a wall surface of the reinforcing member forming the first opening.

In the above technical solutions, the connecting flange achieves a better effect of improving the strength of the wall surface near the first opening, and facilitates a connection, such as welding, between the connecting flange and the wall surface forming the first opening, thereby further improving the sealing effect.

In some embodiments, the connecting tube includes a main body segment and a connecting segment connected to each other, and in a direction perpendicular to a penetration direction of the second opening, a size of the connecting segment is smaller than a size of the main body segment. The connecting segment is provided in the first opening and the second opening in a penetrating manner, and an outer peripheral surface of the connecting segment is connected to the inner peripheral surface of the connecting flange.

In the above technical solutions, a step surface is formed at the junction between the main body segment and the connecting segment that are connected; that is, a part of an end surface, facing the connecting segment, of the main body segment is connected to the connecting segment and the other part is formed into the step surface. The step surface can limit a limit size of the connecting tube inserted into the first opening and the second opening, such that the connecting segment can be inserted into the first hole and the second opening and connected to the connecting flange, and the main body segment can be located outside the openings. This not only reduces obstruction to the flow of the medium in the manifold, but also enables the main body segment of the connecting tube to provide a sufficient heat exchange area.

In some embodiments, the main body segment abuts against a surface of the reinforcing member on a side facing away from the manifold.

In the above technical solutions, not only an insertion size of the connecting tube is limited, but also a connection, such as welding, between the main body segment and the reinforcing member can be formed to further improve the connection strength.

In some embodiments, a joint is disposed at the inlet and/or the outlet, the reinforcing member is provided with a hollow-through hole opposite to the inlet and/or the outlet, and the joint is provided in the hollow-through hole in a penetrating manner and in communication with the inlet or the outlet.

In the above technical solutions, the joint is provided in the hollow-through hole in a penetrating manner and in communication with the inlet or the outlet, such that the cooperation between the reinforcing member and the joint is formed. The reinforcing member can reinforce the strength of the joint and the connection strength between the joint and the manifold, thereby helping to improve the sealing at the junction between the joint and the manifold, and reducing the risk of sealing failure.

In some embodiments, an outer peripheral surface of the joint is provided with a first limiting protrusion, and the first limiting protrusion abuts against a side, facing away from the reinforcing member, of an edge of the inlet or the outlet; and/or the outer peripheral surface of the joint is provided with a second limiting protrusion, and the second limiting protrusion abuts against a side, facing away from the manifold, of an edge of the hollow-through hole.

In the above technical solutions, the first limiting protrusion and the second limiting protrusion can limit an insertion size of the joint during assembly and achieve the positioning of the joint, and can also improve the strength of the junction between the joint and the manifold, such that the overall connection is more reliable, and the sealing and positioning are more stable.

In some embodiments, the manifold is provided with a first side wall and a second side wall adjacent to each other, and the reinforcing member includes a first plate body and a second plate body, where the first side wall cooperates with the connecting tube and is attached to the first plate body, and the second side wall cooperates with the joint and is attached to the second plate body.

In the above technical solutions, the connecting tube and the joint are respectively connected to two adjacent side walls of the manifold, and the pipeline connection on the same side wall of the manifold is simpler, which is less likely to cause structural interference, and avoids excessive impact on the strength of the manifold. The first plate body and the second plate body are attached to two adjacent side surfaces of the manifold, respectively, such that the effect of improving the strength of the manifold is better achieved, and the assembly of the reinforcing member and the manifold is easier.

In some embodiments, the reinforcing member is an integrated member; or the first plate body and the second plate body are separate members.

In the above technical solutions, the integrated reinforcing member exhibits a better overall structural strength, thereby achieving a better effect of improving the strength of the manifold. The split-type first plate body and second plate body may be processed independently, the first opening on the first plate body and the inlet and the outlet on the second plate body may also be processed independently, and thus the processing precision remains unaffected by each other, thereby helping to reduce the processing difficulty. In addition, the alignment accuracy of the first opening and the second opening, and the alignment accuracy of the inlet or the outlet and the hollow-through hole may be independently controlled, which is beneficial to reducing the processing difficulty and the assembly difficulty, and avoids the problem that the first opening is aligned with the second opening, but the inlet cannot be aligned with the hollow-through hole due to the processing error.

In some embodiments, the reinforcing member further includes a third plate body, and the third plate body is connected to an edge of the first plate body distal to the second plate body. The manifold is provided with a third side wall opposite to the second side wall, and the third plate body is attached to the third side wall.

In the above technical solutions, the third plate body is connected to the first plate body to form an L-shaped structure, and in an embodiment in which the first plate body is connected to the second plate body, the first plate body, the second plate body, and the third plate body are formed into a U-shaped structure, which further improves the overall strength of the reinforcing member, and further improves the effect of improving the strength of the manifold.

In some embodiments, the reinforcing member is disposed outside the manifold and provided with a mounting flange extending away from the manifold, and the mounting flange is configured to mount the heat exchange member.

In the above technical solutions, the mounting flange not only improves the strength of the reinforcing member, but also integrates a mounting function into the reinforcing member, thereby reducing the number of parts on the heat exchange member and making the structure simpler.

In some embodiments, the manifold and/or the connecting tube is welded to the reinforcing member.

In the above technical solutions, the welded connection not only exhibits good reliability, but also more easily implements sealing.

In some embodiments, the reinforcing member includes a substrate and a solder layer disposed on a surface of the substrate, and the manifold and/or the connecting tube is welded to the solder layer.

In the above technical solution, the substrate may be made of a material with a certain strength to achieve a good structural reinforcing effect, and the solder layer can achieve a good welding effect with the manifold and the connecting tube to improve the sealing effect.

In some embodiments, the manifold includes a first flow collecting component, the first flow collecting component is provided with the inlet and the outlet, the connecting tube is bent and extended, and two end parts of the connecting tube are both connected to the first flow collecting component, where one end part of the connecting tube is in communication with the inlet and the other end part of the connecting tube is in communication with the outlet to form one liquid flow path.

In the above technical solutions, the two end parts of the connecting tube are both connected to the first flow collecting component, such that the first flow collecting component integrates the functions of flow diversion and convergence, and the inlet and the outlet are integrally arranged. This reduces the number of flow collecting components, simplifies the structure of the manifold, and facilitates the centralized arrangement of the heat exchange member and an external liquid inlet-outlet connecting pipeline, resulting in a more compact structure.

In some embodiments, the manifold includes a first flow collecting component and a second flow collecting component, two end parts of the connecting tube are connected to and in communication with the first flow collecting component and the second flow collecting component, respectively, and at least one of the first flow collecting component and the second flow collecting component is provided with the reinforcing member.

In the above technical solutions, the two end parts of the connecting tube are connected to a first manifold and a second manifold, respectively, such that the positional arrangement among the plurality of connecting tubes is easier, and the structure and the extension path design of the connecting tubes are more flexible and variable.

In some embodiments, the inlet and the outlet are disposed on the first flow collecting component, and at least the first flow collecting component is provided with the reinforcing member.

In the above technical solutions, the inlet and the outlet are integrated into the same first flow collecting component, such that the heat exchange member and the external liquid inlet-outlet connecting pipeline can be arranged in a centralized manner, and the structure is more compact. The first manifold is provided with a reinforcing member, which can improve the structural strength of the first manifold with more complex pipeline connection, thereby improving the connection reliability at the pipeline junction of the first manifold, for example, improving the connection reliability at the joint, and achieving a good effect of reducing the risk of sealing failure.

In some embodiments, structures of the reinforcing member disposed on the first flow collecting component and the reinforcing member disposed on the second flow collecting component are the same or different.

In the above technical solutions, the reinforcing member with the same structure may be formed into a general-purpose member, reducing the production cost; and the reinforcing member with a different structure may be designed with a specific structure, resulting in better matching with the manifold.

In some embodiments, the plurality of connecting tubes include a first connecting tube and a second connecting tube, a medium in the first connecting tube flows from the first flow collecting component to the second flow collecting component, a medium in the second connecting tube flows from the second flow collecting component to the first flow collecting component, a number of the first connecting tubes is equal to a number of the second connecting tubes, and the second flow collecting component is connected in series with the first connecting tube and the second connecting tube to form two liquid flow paths.

In the above technical solutions, the flow directions of the media in the first connecting tube and the second connecting tube are opposite, and one of the first connecting tube and the second connecting tube serves as a liquid inlet tube, and the other serves as a liquid outlet tube; and the number of the first connecting tubes is equal to that of the second connecting tubes, enabling the liquid inlet and liquid outlet to be balanced. This allows liquid in the heat exchange member to flow smoothly and is less likely to cause the problem of excessive local pressure.

In some embodiments, the first flow collecting component is provided with a socket, the heat exchange member further includes a partition member, the partition member is inserted into the socket, and the partition member extends into the first flow collecting component and partitions an inner space of the first flow collecting component into an inflow channel and an outflow channel. The inlet is in communication with the inflow channel, and the outlet is in communication with the outflow channel.

In the above technical solutions, by providing the partition member, the first flow collecting component can be used for both liquid inlet and liquid outlet, and the processes of liquid inlet and liquid outlet do not interfere with each other. In addition, the partition member is inserted into the first flow collecting component via the socket, facilitating assembly. The socket can further limit the partition member at a fixed position, preventing the movement of the partition member from affecting a space separation effect. By providing the partition member for separation, the first flow collecting component may not have a partition function, thereby exhibiting a simpler structure and making it easy to process and form.

In some embodiments, the reinforcing member at least partially covers the socket.

In the above technical solutions, the reinforcing member is capable of shielding a connection structure between the partition member and the manifold at the socket, reducing the risk of sealing failure at the junction.

In some embodiments, two ends of the manifold are provided with channel openings, and the heat exchange member further includes sealing covers. The sealing covers seal the channel openings.

In the above technical solutions, two ends of the manifold are provided with channel openings, and the channel openings are sealed by sealing covers, such that the manifold itself is generally formed into a hollow-through tubular structure, making it easier to form.

In a second aspect, the embodiments of the present application further provide a battery. The battery includes the heat exchange member described above.

In some embodiments, the battery further includes a case assembly and a battery assembly. The case assembly includes a case body integrally formed by stamping, and the case body includes a bottom wall and a surrounding wall. The battery assembly is disposed in the case body, and the battery assembly includes a plurality of battery cells.

In the above technical solutions, since the bottom wall and the surrounding wall of the case body are integrally formed by stamping, no sealing consideration is required at the junction between the bottom wall and the surrounding wall while still ensuring the sealing effect. This can avoid the impact on the battery assembly caused by muddy water infiltrating into the case body from the junction between the bottom wall and the surrounding wall, thereby improving the reliability of the battery. Moreover, the case body integrally formed by stamping does not need to be spliced, such that the production efficiency can be improved.

In some embodiments, the battery includes a temperature adjustment member, the temperature adjustment member includes at least one of a first temperature adjustment member, a second temperature adjustment member, and a third temperature adjustment member, and at least one of the first temperature adjustment member, the second temperature adjustment member, and the third temperature adjustment member forms a heat exchange member, where the first temperature adjustment member is disposed outside the case body and attached to an outer wall of the case body; the second temperature adjustment member is disposed in the case assembly and disposed between the battery assembly and the case assembly; and the third temperature adjustment member is disposed in the case assembly and disposed between two adjacent battery cells.

In the above technical solutions, the battery cells may generate heat during operation, or the battery cells need to be heated in a low-temperature environment to enable the battery cells to be within an appropriate temperature range. By providing the temperature adjustment member, the temperature of the battery cells can be adjusted, thereby improving the stability of the battery cells, and improving the endurance of the battery.

In a third aspect, the embodiments of the present application further provide an electric device. The electric device includes the battery described above.

### BRIEF DESCRIPTION OF THE DRAWINGS

FIG. 1 is a schematic diagram of a vehicle according to an embodiment of the present application;
FIG. 2 is an exploded view of a battery according to some embodiments of the present application;
FIGs. 3 and 4 are schematic structural diagrams of a heat exchange member from different angles according to some embodiments of the present application;
FIG. 5 is an exploded view of a heat exchange member according to some embodiments of the present application;
FIG. 6 is an enlarged schematic structural diagram of the circled portion A in FIG. 5;
FIG. 7 is a partial cross-sectional view of a heat exchange member according to some embodiments of the present application;
FIG. 8 is a schematic structural diagram of a reinforcing member according to some embodiments of the present application;
FIG. 9 is a cross-sectional view of a plate of a reinforcing member according to some embodiments of the present application;
FIG. 10 is a schematic diagram of part of the structure of a heat exchange member according to some embodiments of the present application;
FIG. 11 is an enlarged schematic structural diagram of the circled portion B in FIG. 10;
FIG. 12 is a schematic structural diagram of a partition member according to some embodiments of the present application;
FIG. 13 is a cross-sectional view of a heat exchange member at a partition member according to some embodiments of the present application;
FIG. 14 is a schematic structural diagram of a heat exchange member according to some other embodiments of the present application;
FIG. 15 is an exploded view of a heat exchange member according to some other embodiments of the present application;
FIG. 16 is a partial cross-sectional view of a battery according to some embodiments of the present application;
FIG. 17 is an exploded view of a partial composition of a battery according to some embodiments of the present application; and
FIG. 18 is an assembly diagram of a partial composition of a battery according to some embodiments of the present application.

### Reference numerals:

vehicle 1; battery 1000; controller 2000; motor 3000;
battery assembly 200; battery cell 210; case assembly 300; case body 310; surrounding wall 312; case cover 320; expansion beam 330; bottom protective plate 340;
heat exchange member 100; first temperature adjustment member 110; second temperature adjustment member 120; third temperature adjustment member 130;
connecting tube 10; main body segment 11; connecting segment 12; first connecting tube 13; second connecting tube 14;
manifold 20; inlet 201; outlet 202; first opening 203; socket 204; channel opening 205; first side wall 21; second side wall 22; third side wall 23; first flow collecting component 24; second flow collecting component 25;
reinforcing member 30; second opening 301; hollow-through hole 302; first plate body 31; second plate body 32; third plate body 33; connecting flange 34; mounting flange 35; substrate 36; solder layer 37;
joint 40; second limiting protrusion 41;
partition member 50; sealing cover 60;
first direction X; second direction Y; third direction Z.

### DETAILED DESCRIPTION

To make the objectives, technical solutions, and advantages of embodiments of the present application clearer, the technical solutions in the embodiments of the present application will be clearly described hereinafter with reference to the drawings in the embodiments of the present application. It is apparent that the described embodiments are some, but not all, embodiments of the present application. Based on the embodiments in the present application, all other embodiments obtained by those of ordinary skill in the art without creative efforts shall fall within the protection scope of the present application.

Unless otherwise defined, all technical and scientific terms used in the present application have the same meaning as commonly understood by those skilled in the art to which the present application belongs. The terms used in the specification of the present application are only used to describe specific embodiments and are not intended to limit the present application. The terms "include", "comprise", "have", and "provided with", and any variants thereof in the specification and claims of the present application and the above description of the drawings are intended to cover a non-exclusive inclusion. The terms "first", "second", and the like in the specification and claims of the present application and the above drawings are used to distinguish different objects and are not intended to describe a specific order or priority.

Reference in the present application to "embodiment" means that a particular feature, structure, or characteristic described in connection with the embodiment can be included in at least one embodiment of the present application. The references of the word in the context of the specification do not necessarily refer to the same embodiment, nor to separate or alternative embodiments exclusive of other embodiments.

In the description of the present application, it should be noted that unless otherwise explicitly specified or limited, the terms "mount", "interconnect", "connect", and "attach" shall be construed broadly and may be, for example, fixed connection, detachable connection, or integrated connection, or direct connection, indirect connection via an intermediate, or a communication between interiors of two elements. For those of ordinary skill in the art, the specific meanings of the aforementioned terms in the present application can be understood according to specific conditions.

In the present application, the term "and/or" is merely a way to describe the association relationship between associated objects and indicates that there may be three relationships. For example, A and/or B may indicate that: only A is present, both A and B are present, and only B is present. In addition, the character "/" in the present application generally indicates an "or" relationship between the associated objects before and after the "/".

In the embodiments of the present application, the same reference numerals represent the same components, and for the sake of brevity, detailed descriptions of the same components are omitted in different embodiments. It should be understood that the thickness, length, width, and other dimensions of various components in the embodiments of the present application shown in the drawings, as well as the overall thickness, length, width, and other dimensions of the integrated device are only exemplary and should not be construed as limiting the present application in any way.

The term "plurality of" used in the present application refers to no less than two (including two).

At present, judging from the trends in the market, the application of power batteries is becoming increasingly widespread. Power batteries are not only applied in energy storage power systems such as hydropower, thermal power, wind power, and solar power stations, but also widely applied in electric transportation vehicles such as electric bicycles, electric motorcycles, or electric vehicles, as well as in military equipment, aerospace, and other fields. With the continuous expansion of the application field of power batteries, the market demand for power batteries is also constantly increasing.

It can be understood that the temperature environment in a battery is affected by external weather conditions, and battery cells in the battery need to be in a certain temperature range during operation. When the temperature in the battery exceeds or is lower than the range, the stability of the battery and the battery performance may be greatly affected. For example, in hot weather, the battery needs to cool the battery cells to dissipate heat, such that the temperature in the battery is within the required temperature range. In cold weather, the battery needs to heat the battery cells, such that the temperature in the battery can still be within the required temperature range.

A heat exchange member may be configured to circulate a heat exchange medium and exchange heat with a component to be heat-exchanged, such as a battery, such that the heat or cold of the heat exchange medium is transferred to the component to be heat-exchanged. This achieves the heat exchange with the component to be heat-exchanged to heat or cool the component to be heat-exchanged, and achieves the temperature adjustment, such that the component to be heat-exchanged can be within a more appropriate temperature range.

The structural strength of the heat exchange member has a significant impact on the service life and the risk of air tightness failure failure of the heat exchange member. For example, in an embodiment in which the heat exchange member is used in a battery, a weak structural strength of the heat exchange member will lead to insufficient pressure-bearing capacity, and it is easy to cause structural deformation and damage, air tightness failure, or the like due to external forces, such as the weight of a battery assembly, an expansion force of the battery cells, and an external impact force, thereby reducing the heat exchange capacity, or causing the leakage of the heat exchange medium. Therefore, how to improve the structural strength of the heat exchange member has become a research and development focus in the art.

In some related technologies, the strength is improved by increasing the thickness of a plate of the heat exchange member, which increases the difficulty in processing structures such as holes on the heat exchange member, limits the processing of small-sized structures such as holes, and increases the processing cost.

Based on this, the present application provides a heat exchange member. The heat exchange member includes: a plurality of connecting tubes, a manifold, and a reinforcing member. The plurality of connecting tubes are spaced apart from each other. The manifold is provided with an inlet and an outlet. The inlet is configured to input a medium, and the outlet is configured to output the medium. The manifold is connected to and in communication with each connecting tube. The manifold and the plurality of connecting tubes jointly form a plurality of liquid flow paths arranged in parallel, and each liquid flow path is from the inlet to the outlet. The reinforcing member is disposed on the manifold, and the reinforcing member is configured to reinforce the strength of the manifold.

In the heat exchange member with the structure described above, by providing the reinforcing member capable of reinforcing the strength of the manifold, the manifold is less prone to deformation, collapse, or other problems during assembly and use, thereby reducing the risk of air tightness failure and improving the overall structural strength and the service life of the heat exchange member.

The heat exchange member disclosed in the embodiments of the present application can be used in electric devices that use batteries as the power source or in various energy storage systems that use batteries as the energy storage element. The electric device may be, but is not limited to, a mobile phone, a tablet, a laptop computer, an electric toy, an electric tool, an electric bicycle, an electric vehicle, a ship, a spacecraft, or the like. The electric toy may include stationary or mobile electric toys, such as game consoles, electric car toys, electric ship toys, or electric airplane toys. The spacecraft may include airplanes, rockets, space shuttles, spaceships, and the like.

In the following embodiments, for ease of description, the present application is illustrated by taking a vehicle 1 as an example of the electric device according to an embodiment of the present application.

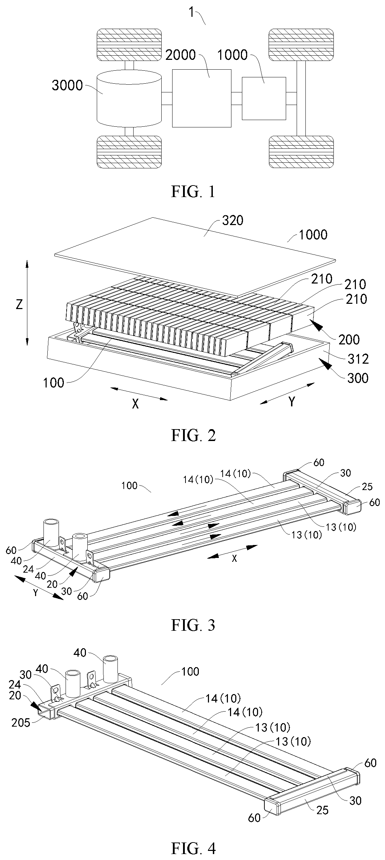

Referring to FIG. 1, FIG. 1 is a schematic diagram of a vehicle 1 according to some embodiments of the present application. The vehicle 1 may be a fuel vehicle, a gas vehicle, or a new energy vehicle. The new energy vehicle may be a pure electric vehicle, a hybrid vehicle, an extended-range vehicle, or the like. A battery 1000 is disposed inside the vehicle 1, and the battery 1000 may be disposed at the bottom, head, or tail of the vehicle 1. The battery 1000 may be configured to power the vehicle 1. For example, the battery 1000 may serve as an operation power source for the vehicle 1. The vehicle 1 may further include a controller 2000 and a motor 3000. The controller 2000 is configured to control the battery 1000 to power the motor 3000, e.g., for the operation power needed by the vehicle 1 for start-up, navigation, and driving.

In some embodiments of the present application, the battery 1000 may not only serve as an operation power source for the vehicle 1, but also as a driving power source for the vehicle 1 to, instead of or in part instead of fuel or natural gas, provide driving power for the vehicle 1.

Referring to FIG. 2, FIG. 2 is an exploded view of the battery 1000 according to some embodiments of the present application. The battery 1000 includes a case assembly 300, battery cells 210, and a heat exchange member 100. The case assembly 300 is provided with an accommodating cavity, the battery cells 210 are accommodated in the accommodating cavity of the case assembly 300, and the heat exchange member 100 may be disposed between the battery cells 210 and the case assembly 300, or between adjacent battery cells 210.

The case assembly 300 is configured to provide an accommodating space for the battery cells 210, and the case assembly 300 may be of a variety of structures. In some embodiments, the case assembly 300 may include a first part (e.g., a case body 310 described below) and a second part (e.g., a case cover 320 described below). The first part and the second part are lidded with each other, and the first part and the second part jointly define the accommodating space for accommodating the battery cells 210. The second part may be of a hollow structure with one end open, and the first part may be of a plate-shaped structure. The open side of the second part is lidded with the first part, such that the first part and the second part jointly define the accommodating space. The first part and the second part may also each be of a hollow structure with one side open, and the open side of the second part is lidded with the open side of the first part. Certainly, the case assembly 300 formed by the first part and the second part may be in various shapes, such as a cylinder or a rectangular parallelepiped. Optionally, in some embodiments, the case assembly 300 further includes a bottom protective plate 340, and the bottom protective plate 340 is disposed on the lower side of the case body 310 to further enhance the carrying strength and the impact resistance of the bottom of the case body 310. The bottom protective plate 340 may also be made of various materials, including but not limited to: copper, iron, aluminum, stainless steel, aluminum alloy, and the like.

In the battery 1000, a plurality of battery cells 210 may be provided, and the plurality of battery cells 210 may be connected in series, in parallel, or in series-parallel. The series-parallel connection means that both series connection and parallel connection are present for the connection among the plurality of battery cells 210. The plurality of battery cells 210 may be directly connected in series, in parallel, or in series-parallel, and then the whole formed by the plurality of battery cells 210 is accommodated in the case assembly 300. Certainly, the situation may be that in the battery 1000, the plurality of battery cells 210 are first connected in series, in parallel, or in series-parallel to form battery modules, and then the plurality of battery modules are connected in series, in parallel, or in series-parallel to form a whole and accommodated in the case assembly 300. The battery 1000 may further include other structures. For example, the battery 1000 may further include a busbar component for achieving electrical connection among the plurality of battery cells 210.

Each battery cell 210 may be a secondary battery or a primary battery; it may also be a lithium-sulfur battery, a sodium-ion battery, or a magnesium-ion battery, but is not limited thereto. The battery cell 210 may be cylindrical, flat, rectangular parallelepiped-shaped, or in other shapes.

In the battery 1000, the heat exchange member 100 may be disposed between the plurality of battery cells 210 and the top wall of the case assembly 300, or between the plurality of battery cells 210 and the bottom wall of the case assembly 300, or between the bottom wall of the case assembly 300 and the bottom protective plate 340, or between two adjacent battery cells 210, to provide a heat exchange effect for the plurality of battery cells 210. In some embodiments, the heat exchange member 100 may include a connecting tube 10 and a manifold 20, where the connecting tube 10 is connected to the manifold 20. The connecting tube 10 may be a flat tube, a round tube, a harmonica tube, or a pipe of other shapes, and the manifold 20 may be a rectangular tube, a circular tube, or the like.

A heat exchange member 100 according to the embodiments of the present application is described below with reference to the drawings.

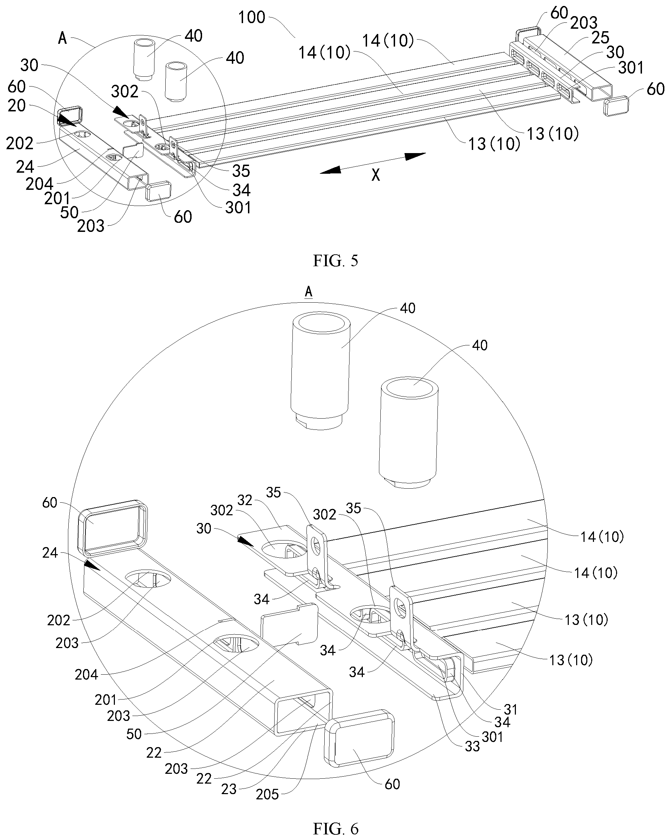

Referring to FIGs. 3 to 6, FIGs. 3 and 4 are schematic structural diagrams of a heat exchange member 100 from different angles according to some embodiments of the present application; FIG. 5 is an exploded view of a heat exchange member 100 according to some embodiments of the present application; and FIG. 6 is an enlarged schematic structural diagram of the circled portion A in FIG. 5. The heat exchange member 100 includes: a plurality of connecting tubes 10, a manifold 20, and a reinforcing member 30.

Specifically, the plurality of connecting tubes 10 are spaced apart from each other. The manifold 20 is provided with an inlet 201 and an outlet 202. The inlet 201 is configured to input a medium, and the outlet 202 is configured to output the medium. The manifold 20 is connected to and in communication with each connecting tube 10, the manifold 20 and the plurality of connection tubes 10 jointly form a plurality of liquid flow paths arranged in parallel, and each liquid flow path flows from the inlet 201 to the outlet 202. The reinforcing member 30 is disposed on the manifold 20 and configured to reinforce the strength of the manifold 20.

The connecting tube 10 is a tube body structure capable of allowing a medium to flow and defining a flow path of the medium, such as a circular tube, a rectangular tube, an elliptical tube, or a harmonica tube. The connecting tube 10 may extend along one of or a combination of several of shapes, such as a straight line or an arc. The connecting tube 10 may be made of a material having excellent thermal conductivity, such as a metallic material, specifically aluminum, copper, or the like. Illustratively, the connecting tube 10 may be an aluminum tube.

The plurality of connecting tubes 10 being spaced apart from each other means that the channels in the connecting tubes 10 are not in direct communication with each other, but are all in communication with the manifold 20. A certain gap may be spatially formed between the connecting tubes 10, or the connecting tubes may be in contact with each other, which both fall within the protection scope of the present application.

The manifold 20 can define a channel for the medium to flow, enabling the heat exchange member 100 to be in communication with an external medium by means of the inlet 201 and the outlet 202. The manifold 20 may include a tube body structure, such as a circular tube, a rectangular tube, or an elliptical tube. The manifold 20 may be made of a material having excellent thermal conductivity or a material having relatively high structural strength, such as a metallic material, specifically aluminum, stainless steel, or the like.

The manifold 20 is connected to and in communication with each connecting tube 10, the manifold 20 and the plurality of connection tubes 10 jointly form a plurality of liquid flow paths arranged in parallel, and each liquid flow path flows from the inlet 201 to the outlet 202. Each liquid flow path may flow through one connecting tube 10 from the inlet 201 to the outlet 202, or may flow through at least two connecting tubes 10 sequentially from the inlet 201 to the outlet 202. The manifold 20 can divert the medium flowing in from the inlet 201 to the plurality of liquid flow paths, and achieve the convergence of the medium in the plurality of liquid flow paths, such that the connection between the heat exchange member 100 and an external pipeline is simpler.

In the present application, a forming process of the connecting tube 10 and the manifold 20 is not limited. For example, the connecting tube and the manifold may be formed by extrusion, or may be formed by sheet metal bending and fixed by welding.

The reinforcing member 30 may be made of a material having a certain strength, such as stainless steel, a composite material, or a multi-layer material. The structure of the reinforcing member 30 may be flexibly configured based on actual situations. For example, the reinforcing member 30 may include a plate body attached to the manifold 20, and the overall plate thickness is increased by means of the attachment to improve the structural strength. For example, the reinforcing member 30 may include a support structure disposed in the manifold 20 and supporting two opposite side wall surfaces of the manifold 20, and the structural strength is improved by means of the support.

The position of the reinforcing member 30 may be flexibly arranged based on actual situations. For example, the reinforcing member 30 may be disposed inside the manifold 20; or the reinforcing member 30 may be disposed outside the manifold 20, to facilitate the assembly of the reinforcing member 30 and the manifold 20, the connection between the reinforcing member 30 and the connecting tube 10, and the like. The reinforcing member 30 may be connected to the manifold 20 by using a connection manner such as welding, or screwing.

Compared with the connecting tube 10, the manifold 20 functioning to collect flow exhibits stronger pressure, more complex pipeline connection, and higher requirements for strength. The strength of the manifold 20 can be reinforced by means of the reinforcing member 30, such that the overall structural strength of the heat exchange member 100 is enhanced, the manifold 20 is less prone to deformation, collapse, or rupture during use, and thus the connection between the manifold 20 and the connecting tube 10 is not easy to fail, thereby improving the service life of the heat exchange member 100.

According to the heat exchange member 100 in the embodiments of the present application, by providing the reinforcing member 30 capable of reinforcing the strength of the manifold 20, the manifold 20 is less prone to deformation, collapse, or other problems during assembly and use, thereby reducing the risk of air tightness failure and improving the overall structural strength and the service life of the heat exchange member 100.

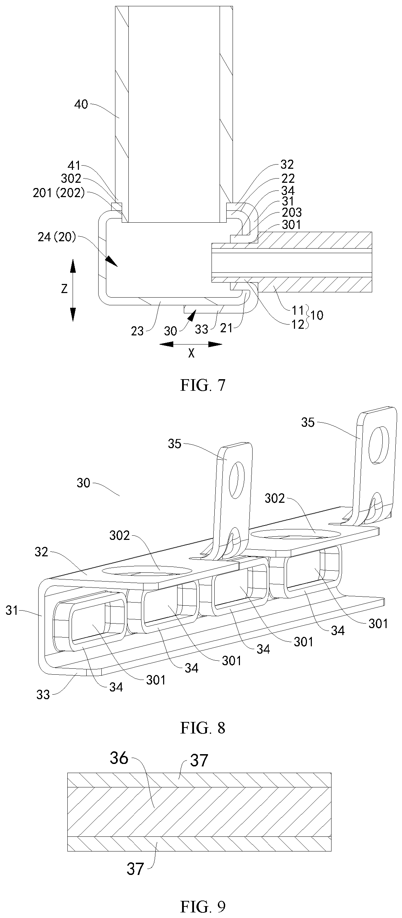

In some embodiments, referring to FIG. 7, FIG. 7 is a partial cross-sectional view of a heat exchange member 100 according to some embodiments of the present application. The manifold 20 and the connecting tube 10 are both connected to the reinforcing member 30. The manifold 20 is connected to the reinforcing member 30, such that the reinforcing member 30 can reinforce the strength of the manifold 20. The connection between the connecting tube 10 and the reinforcing member 30 can reinforce the structural strength of the connecting tube 10. In addition, compared with the manifold 20, the structural design of the reinforcing member 30 is more flexible, thereby making it easier to achieve the connection between the reinforcing member and the connecting tube 10, and improving the connection reliability and the sealing performance. Therefore, the reinforcing member 30 connecting the connecting tube 10 and the manifold 20 is beneficial to reducing the risk of connection and sealing failure of the connecting tube 10.

The connection manner between the connecting tube 10 and the reinforcing member 30 includes, but is not limited to, welding, screwing, or the like. For example, in some embodiments, at least one of the manifold 20 and the connecting tube 10 is welded to the reinforcing member 30. The welded connection not only exhibits good reliability, but also more easily implements sealing. In an embodiment in which the manifold 20 and the connecting tube 10 are welded to the reinforcing member 30, the connecting tube 10 is not directly welded to the manifold 20, which is more beneficial to reducing the limitation on the thickness, material, and structure of the plate of the manifold 20, thereby helping reduce the forming cost.

In some specific embodiments, as shown in FIG. 9, a cross-sectional view of a plate of a reinforcing member 30 according to some embodiments of the present application is provided, where the reinforcing member 30 includes a substrate 36 and a solder layer 37 disposed on the surface of the substrate 36, and at least one of the manifold 20 and the connecting tube 10 is welded to the solder layer 37.

The substrate 36 may be made of a material having a certain strength, for example, stainless steel or aluminum. The solder layer 37 refers to a material layer whose melting point is lower than that of the substrate 36, such that the substrate 36 is not easy to melt and deform in a welding process. In some specific embodiments, the substrate 36 is made of a three-system aluminum alloy having a melting point of about 610 °C, the solder layer 37 is made of a four-system aluminum alloy having a melting point of about 580 °C. The connecting tube 10 is connected to the reinforcing member 30 by brazing. In the brazing process, the solder layer 37 is melted and connected to the connecting tube 10, and the shape of the substrate 36 remains unchanged, thereby achieving a good reinforcing effect.

According to some embodiments of the present application, as shown in FIGs. 3 to 4 and FIG. 7, the reinforcing member 30 is disposed outside the manifold 20, and at least part of the reinforcing member 30 is attached to the outer surface of the manifold 20.

The reinforcing member 30 is disposed outside the manifold 20, which facilitates the assembly of the reinforcing member 30 and the manifold 20 and is not affected by the size of an internal space of the manifold 20; and in addition, at least part of the reinforcing member 30 is attached to the outer surface of the manifold 20, which can increase the overall thickness of the attached region, thereby effectively improving the strength.

In some specific embodiments, in a circumferential direction of the manifold 20, the reinforcing member 30 is formed into a non-closed structure, that is, a tubular structure is not formed, which facilitates the assembly of the manifold 20 and the reinforcing member 30. For example, the reinforcing member 30 may be attached to the surface of one side of the manifold 20, and the reinforcing member 30 is generally formed into a linear structure; or the reinforcing member 30 may be attached to two side surfaces of the manifold 20, and the reinforcing member 30 is generally formed into an L-shaped structure; or the reinforcing member 30 may be attached to three side surfaces of the manifold 20, and the reinforcing member 30 is generally formed into a U-shaped structure, which can reduce the difficulty of assembling the manifold 20 and the reinforcing member 30.

According to some embodiments of the present application, as shown in FIGs. 6 to 8, the manifold 20 is provided with first openings 203, the reinforcing member 30 is provided with second openings 301 opposite to the first openings 203, and the peripheral edge of the second opening 301 is provided with a connecting flange 34. The connecting tube 10 is provided in the first opening 203 and the second opening 301 in a penetrating manner, and the connecting tube 10 is connected to the inner peripheral surface of the connecting flange 34.

The first opening 203 and the second opening 301 may be formed by using a process such as stamping. The shapes of the first opening 203 and the second opening 301 may be the same or different, provided that the connecting tube 10 can pass through the first opening and the second opening. The connecting flange 34 may be integrally formed on the reinforcing member 30 by stamping, welding, or the like. By providing the connecting flange 34, a contact area, such as a welding area, between the reinforcing member 30 and the connecting tube 10 may be increased, thereby improving the connection reliability and the sealing reliability.

In some embodiments, as shown in FIG. 7, the connecting flange 34 is provided in the first opening 203 in a penetrating manner. For example, when the reinforcing member 30 is disposed outside the manifold 20, the connecting flange 34 may be provided inward in the first opening 203 in a penetrating manner; and when the reinforcing member 30 is disposed outside the manifold 20, the connecting flange 34 may be provided outward in the first opening 203 in a penetrating manner.

The connecting flange 34 being provided in the first opening 203 in a penetrating manner can reduce an occupied space in a thickness direction of the plate, and improve a reinforcing effect of the reinforcing member 30 on the strength of the manifold 20, particularly the strength near the first opening 203; and in addition, the connecting flange 34 can separate the wall surface of the first opening 203 from the connecting tube 10, making a weak sealing region less likely to form.

The connecting flange 34 may be in contact with or spaced apart from the wall surface of the first opening 203. In some specific embodiments, with continued reference to FIG. 7, the outer peripheral surface of the connecting flange 34 is attached to the wall surface, forming the first opening 203, of the reinforcing member 30. The connecting flange 34 achieves a better effect of improving the strength of the wall surface near the first opening 203, and facilitates a connection, such as welding, between the connecting flange 34 and the wall surface forming the first opening 203, thereby further improving a sealing effect.

In some embodiments of the present application, as shown in FIG. 7, the connecting tube 10 includes a main body segment 11 and a connecting segment 12 connected to each other. In a direction perpendicular to a penetration direction of the second opening 301 (a third direction Z or a second direction Y shown in FIG. 7), the size of the connecting segment 12 is smaller than the size of the main body segment 11. The connecting segment 12 is provided in the first opening 203 and the second opening 301 in a penetrating manner, and the outer peripheral surface of the connecting segment 12 is connected to the inner peripheral surface of the connecting flange 34.

A step surface is formed at the junction between the main body segment 11 and the connecting segment 12 connected to each other; that is, a part of the end surface, facing the connecting segment 12, of the main body segment 11 is connected to the connecting segment 12 and the other part is formed into the step surface. The step surface can limit a limit size of the connecting tube 10 inserted into the first opening 203 and the second opening 301, such that the connecting segment 12 can be inserted into the first hole and the second opening 301 and connected to the connecting flange 34, and the main body segment 11 can be located outside the openings. This not only reduces obstruction to the flow of the medium in the manifold 20, but also enables the main body segment 11 of the connecting tube 10 to provide a sufficient heat exchange area.

For example, the main body segment 11 may abut against the surface of the reinforcing member 30 on the side facing away from the manifold 20, which not only limits an insertion size of the connecting tube 10, but also forms a connection, such as welding, between the main body segment 11 and the reinforcing member 30 to further improve the connection strength.

According to some embodiments of the present application, as shown in FIGs. 3 to 7, at least one of the inlet 201 and the outlet 202 is provided with a joint 40, the reinforcing member 30 is provided with a hollow-through hole 302 opposite to the at least one of the inlet 201 and the outlet 202, and the joint 40 is provided in the hollow-through hole 302 in a penetrating manner and in communication with the inlet 201 or the outlet 202.

The joint 40 may be a circular tube, a square tube, a threaded tube, or the like. The material of the joint 40 includes, but is not limited to, aluminum alloy, stainless steel, or other materials having a certain hardness. The forming manner of the joint 40 includes, but is not limited to, extrusion forming, stamping forming, or the like. The joint 40 may be configured to achieve the connection between the heat exchange member 100 and the outside. For example, in a thermal management system of the vehicle 1, the joint 40 can achieve the connection between the heat exchange member 100 and other pipelines in the thermal management system.

The joint 40 disposed at the inlet 201 is provided in the corresponding hollow-through hole 302 in a penetrating manner and is in communication with the inlet 201. The joint 40 disposed at the outlet 202 is provided in the corresponding hollow-through hole 302 in a penetrating manner and in communication with the outlet 202. For example, the joint 40 may be provided in the hollow-through hole 302 and the inlet 201 in a penetrating manner; for another example, the joint 40 may be provided in the hollow-through hole 302 in a penetrating manner, and an end surface of the joint 40 is connected to the surface of the side wall, forming the inlet 201, of the manifold 20, all of which fall within the protection scope of the present application.

The joint 40 is provided in the hollow-through hole 302 in a penetrating manner and in communication with the inlet 201 or the outlet 202, such that the cooperation between the reinforcing member 30 and the joint 40 is formed. The reinforcing member 30 can reinforce the strength of the joint 40 and the connection strength between the joint 40 and the manifold 20, thereby helping to improve the sealing at the junction between the joint 40 and the manifold 20, and reducing the risk of sealing failure.

In some embodiments, the outer peripheral surface of the joint 40 is provided with a first limiting protrusion, and the first limiting protrusion abuts against the side, facing away from the reinforcing member 30, of an edge of the inlet 201 or the outlet 202. Specifically, the first limiting protrusion of the joint 40 disposed at the inlet 201 abuts against the edge of the inlet 201, and the first limiting protrusion of the joint 40 disposed at the outlet 202 abuts against the edge of the outlet 202. In one aspect, the first limiting protrusion can limit the size of the joint 40 inserted into the corresponding inlet 201 or outlet 202, achieving the positioning of the joint 40, and in another aspect, the first limiting protrusion can also improve the strength of the junction between the joint 40 and the manifold 20.

In some embodiments, as shown in FIG. 7, the outer peripheral surface of the joint 40 is provided with a second limiting protrusion 41, and the second limiting protrusion 41 abuts against the side, facing away from the manifold 20, of an edge of the hollow-through hole 302. The second limiting protrusion 41 can limit the size of the joint 40 inserted into the corresponding hollow-through hole 302, achieving the positioning of the joint 40, and help to improve the strength of the junction between the joint 40 and the reinforcing member 30.

In addition, in an embodiment in which the reinforcing member 30 is disposed outside the manifold 20, as shown in FIG. 7, the first limiting protrusion limits an insertion size of the joint 40 during assembly, and the second limiting protrusion 41 prevents the joint 40 from being separated from the manifold 20 and the reinforcing member 30 caused by pulling out the joint. The first limiting protrusion and the second limiting protrusion 41 cooperate to achieve bidirectional limiting in an insertion direction of the joint 40, such that the overall connection is more reliable, and the sealing and positioning are more stable.

The first limiting protrusion and the second limiting protrusion 41 may be formed into a step structure or a protruding structure by using processes such as cutting, stamping, or riveting, which are not particularly limited in the present application. In the example shown in FIG. 7, the first limiting protrusion is a flared flange formed by radially outward deformation of an end part of the joint 40, and the second limiting protrusion 41 is a step structure formed by cutting the outer peripheral surface of the joint 40, such that the processing is simple, thereby helping reduce the production cost.

According to some embodiments of the present application, as shown in FIGs. 6 to 8, the manifold 20 is provided with a first side wall 21 and a second side wall 22 adjacent to each other, and the reinforcing member 30 includes a first plate body 31 and a second plate body 32. The first side wall 21 cooperates with the connecting tube 10 and is attached to the first plate body 31, and the second side wall 22 cooperates with the joint 40 and is attached to the second plate body 32.

For example, the first side wall 21 is provided with a first opening 203, the first plate body 31 is provided with a second opening 301, the first plate body 31 is attached to the inner side or the outer side of the first side wall 21, and the connecting tube 10 is provided in the first opening 203 and the second opening 301 in a penetrating manner; and the second side wall 22 is provided with an inlet 201 or an outlet 202, the second plate body 32 is provided with a hollow-through hole 302, the second plate body 32 is attached to the inner side or the outer side of the second side wall 22, and the joint 40 is provided in the hollow-through hole 302 and the corresponding inlet 201 or outlet 202 in a penetrating manner.

The connecting tube 10 and the joint 40 are respectively connected to two adjacent side walls of the manifold 20, and the pipeline connection on the same side wall of the manifold 20 is simpler, which is less likely to cause structural interference, and avoids excessive impact on the strength of the manifold 20. The first plate body 31 and the second plate body 32 are attached to two adjacent side surfaces of the manifold 20, respectively, such that the effect of improving the strength of the manifold 20 is better achieved, and the assembly of the reinforcing member 30 and the manifold 20 is easier.

In some embodiments, as shown in FIGs. 6 to 8, the reinforcing member 30 is an integrated member. For example, the first plate body 31 and the second plate body 32 are integrally formed in an L shape. In an embodiment in which the reinforcing member 30 further includes other structures, the other structures may be integrally formed with the first plate body 31 and the second plate body 32. The reinforcing member 30 exhibits a better overall structural strength, thereby achieving a better effect of improving the strength of the manifold 20.

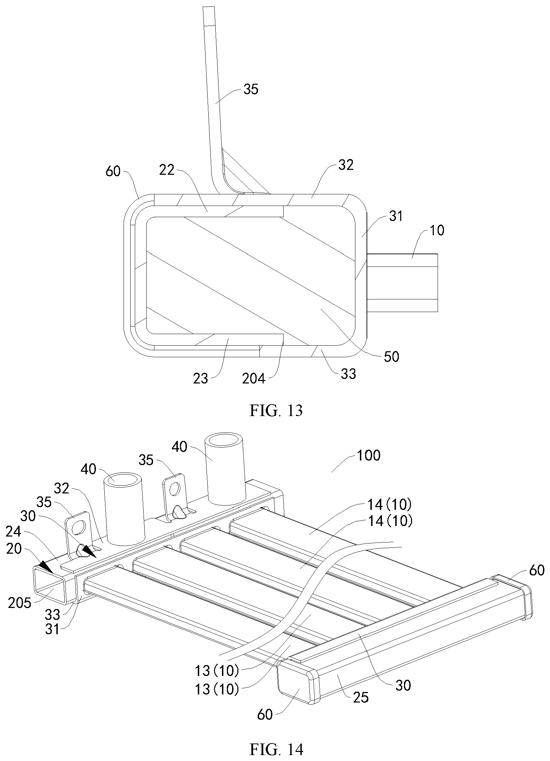

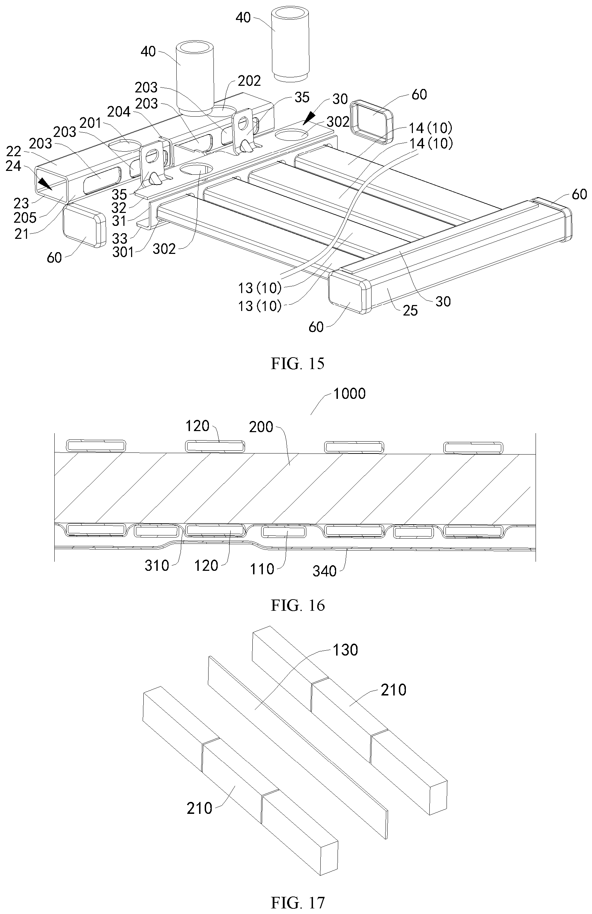

In some other embodiments, referring to FIGs. 14 and 15, FIG. 14 is a schematic structural diagram of a heat exchange member 100 according to some other embodiments of the present application; and FIG. 15 is an exploded view of the heat exchange member 100 according to some other embodiments of the present application. The first plate body 31 and the second plate body 32 are separate members. The first plate body 31 and the second plate body 32 may be processed independently, the first opening 203 on the first plate body 31 and the inlet 201 and the outlet 202 on the second plate body 32 may also be processed independently, and thus the processing precision remains unaffected by each other, thereby helping to reduce the processing difficulty. In addition, the alignment accuracy of the first opening 203 and the second opening 301, and the alignment accuracy of the inlet 201 or the outlet 202 and the hollow-through hole 302 may be independently controlled, which is beneficial to reducing the processing difficulty and the assembly difficulty, and avoids the problem that the first opening 203 is aligned with the second opening 301, but the inlet 201 cannot be aligned with the hollow-through hole 302 due to the processing error.

In some embodiments of the present application, as shown in FIGs. 7 to 8 and FIGs. 14 and 15, the reinforcing member 30 further includes a third plate body 33, and the third plate body 33 is connected to the edge of the first plate body 31 distal to the second plate body 32. The manifold 20 is provided with a third side wall 23 opposite to the second side wall 22, and the third plate body 33 is attached to the third side wall 23.

Four, five, six, or more side walls of the manifold 20 may be provided as shown in FIG. 7, and three adjacent side walls are formed into a first side wall 21, a second side wall 22, and a third side wall 23. The attachment of the third plate body 33 and the third side wall 23 can increase the mating area between the manifold 20 and the reinforcing member 30, and improve the connection reliability and the overall strength.

Moreover, the third plate body 33 is connected to the first plate body 31 to form an L-shaped structure. In an embodiment in which the first plate body 31 is connected to the second plate body 32, the first plate body 31, the second plate body 32, and the third plate body 33 are formed into a U-shaped structure, which further improves the overall strength of the reinforcing member 30, and further improves the effect of improving the strength of the manifold 20.

According to some embodiments of the present application, as shown in FIGs. 3 to 5, the reinforcing member 30 is disposed outside the manifold 20 and provided with a mounting flange 35 extending away from the manifold 20, and the mounting flange 35 is configured to mount the heat exchange member 100.

For example, as shown in FIG. 5, the mounting flange 35 is disposed on the second plate body 32 of the reinforcing member 30 and extends upward relative to the second plate body 32 to extend away from the manifold 20. The mounting flange 35 is configured to mount the heat exchange member 100; that is, the heat exchange member 100 may be mounted in a device to which the heat exchange member is applied by means of the mounting flange 35. For example, in an embodiment in which the heat exchange member 100 is used in the battery 1000, the mounting flange 35 may be connected to other structures of the battery 1000 by means of fasteners, welding, or the like. Specifically, the mounting flange 35 may be connected to a side beam of the case assembly 300 of the battery 1000 or a partition beam within the case assembly 300.

The mounting flange 35 not only improves the strength of the reinforcing member 30, but also integrates a mounting function into the reinforcing member 30, thereby reducing the number of parts on the heat exchange member 100 and making the structure simpler.

In some embodiments of the present application, the manifold 20 includes a first flow collecting component 24, and the first flow collecting component 24 is provided with an inlet 201 and an outlet 202. The connecting tube 10 is bent and extended, and two end parts of the connecting tube 10 are both connected to the first flow collecting component 24. One end part of the connecting tube 10 is in communication with the inlet 201 and the other end part of the connecting tube 10 is in communication with the outlet 202 to form a liquid flow path.

The connecting tube 10 may be a U-shaped tube, a serpentine tube, a loop tube, or a tube extending along any other path. A starting end and a terminal end on the extension path of the connecting tube 10 are formed into two end parts of the connecting tube 10.

The two end parts of the connecting tube 10 are both connected to the first flow collecting component 24, such that the first flow collecting component 24 integrates the functions of flow diversion and convergence, and integrates the inlet 201 and the outlet 202, reducing the number of flow collecting components, simplifying the structure of the manifold 20, and facilitating the concentrated arrangement of the heat exchange member 100 and an external liquid inlet-outlet connecting pipeline, thereby making the structure more compact.

In some other embodiments of the present application, as shown in FIGs. 3 to 5, the manifold 20 includes a first flow collecting component 24 and a second flow collecting component 25. Two end parts of the connecting tube 10 are connected to and in communication with the first flow collecting component 24 and the second flow collecting component 25, respectively, and at least one of the first flow collecting component 24 and the second flow collecting component 25 is provided with a reinforcing member 30.

The connecting tube 10 may be a straight tube, or may be a U-shaped tube, a serpentine tube, a loop tube, or a tube extending along any other path. A starting end and a terminal end on the extension path of the connecting tube 10 are formed into two end parts of the connecting tube 10.

The two end parts of the connecting tube 10 are connected to a first manifold 20 and a second manifold 20, respectively, such that the positional arrangement among the plurality of connecting tubes 10 is easier, and the structure and the extension path design of the connecting tube 10 are more flexible and variable. For example, a series-parallel connection of a plurality of straight tubes can be achieved, and the plurality of connecting tubes 10 may be all connected in parallel, or some of the connecting tubes 10 may be connected in series to form a liquid flow path before being connected in parallel with other liquid flow paths.

At least one of the first manifold 20 and the second manifold 20 is provided with a reinforcing member 30, which can improve the structural strength of the manifold 20. In an embodiment in which the first manifold 20 and the second manifold 20 are both provided with the reinforcing members 30, the manifold 20 achieves a higher overall strength.

In some embodiments, the inlet 201 and the outlet 202 may be disposed on the first flow collecting component 24 and the second flow collecting component 25, respectively, such that the liquid in the plurality of connecting tubes 10 flows in the same direction, and the structures of the first flow collecting component 24 and the second flow collecting component 25 are simpler without liquid reversing.

In some other embodiments, as shown in FIGs. 3 to 6, the inlet 201 and the outlet 202 are disposed on the first flow collecting component 24, and at least the first flow collecting component 24 is provided with the reinforcing member 30. Therefore, as shown by arrows in the figure, after the medium flows into the first flow collecting component 24 from the inlet 201, the medium flows to the second flow collecting component 25 through a part of the connecting tubes 10, and flows to the other part of the connecting tubes 10 along the second flow collecting component 25 to achieve reversing. Then, the medium flows back to the first flow collecting component 24 through the other part of the connecting tubes 10, so as to flow out through the outlet 202 of the first flow collecting component 24.

The inlet 201 and the outlet 202 are integrated in the same first flow collecting component 24, such that the heat exchange member 100 and the external liquid inlet-outlet connecting pipeline can be arranged in a concentrated manner, and the structure is more compact. The first manifold 20 is provided with the reinforcing member 30, which can improve the structural strength of the first manifold 20 with more complex pipeline connection, thereby improving the connection reliability at the pipeline junction of the first manifold 20, for example, improving the connection reliability at the joint 40, and achieving a good effect of reducing the risk of sealing failure.

The structures of the reinforcing member 30 disposed on the first flow collecting component 24 and the reinforcing member 30 disposed on the second flow collecting component 25 may be the same or different. The reinforcing member 30 with the same structure may be formed into a general-purpose member, reducing the production cost; and the reinforcing member 30 with a different structure may be designed with a specific structure, resulting in better matching with the manifold 20.

For example, as shown in FIGs. 3 to 5, the mounting flanges 35 may be disposed only on the reinforcing member 30 connected to the first flow collecting component 24, or may be disposed on two reinforcing members 30. For example, in an embodiment in which the inlet 201 and the outlet 202 are integrated in the first flow collecting component 24, the hollow-through hole 302 may be disposed only on the reinforcing member 30 of the first flow collecting component 24; and in an embodiment in which the inlet 201 and the outlet 202 are disposed on the first flow collecting component 24 and the second flow collecting component 25, respectively, the reinforcing members 30 of the first flow collecting component 24 and the second flow collecting component 25 may both be provided with the hollow-through holes 302.

In some embodiments in which the reinforcing member 30 includes the first plate body 31, the second plate body 32, and the third plate body 33 that are respectively attached to three adjacent side surfaces of the manifold 20, as shown in FIGs. 6 to 8, the second plate body 32 and the third plate body 33 are respectively located on two sides of the first plate body 31, and the first plate body 31 is connected to the connecting tubes 10. The second plate body 32 of the reinforcing member 30 disposed on the first flow collecting component 24 is provided with two hollow-through holes 302, and the inlet 201 and the outlet 202 are respectively opposite to the two hollow-through holes 302.

According to some embodiments of the present application, as shown in FIG. 3, the plurality of connecting tubes 10 include first connecting tubes 13 and second connecting tubes 14. The medium in the first connecting tubes 13 flows from the first flow collecting component 24 to the second flow collecting component 25, and the medium in the second connecting tubes 14 flows from the second flow collecting component 25 to the first flow collecting component 24. The number of the first connecting tubes 13 is equal to the number of the second connecting tubes 14, and the second flow collecting component 25 is connected in series with the first connecting tubes 13 and the second connecting tubes 14 to form two liquid flow paths.

The flow directions of the medium in the first connecting tube 13 and the second connecting tube 14 are opposite, and one of the first connecting tube and the second connecting tube serves as a liquid inlet tube, and the other serves as a liquid outlet tube; and the number of the first connecting tubes 13 is equal to that of the second connecting tubes 14, enabling the liquid inlet and liquid outlet to be balanced. This allows liquid in the heat exchange member 100 to flow smoothly and is less likely to cause the problem of excessive local pressure. For example, as shown in FIG. 3, the heat exchange member 100 includes four connecting tubes 10, two of the connecting tubes are the first connecting tubes 13, the other two of the connecting tubes are the second connecting tubes 14, and the second flow collecting component 25 implements the reversing between the first connecting tubes 13 and the second connecting tubes 14. Certainly, the number of the first connection tubes 13 and the second connection tubes 14 may be three, four, or more, to form more liquid flow paths and provide a larger heat exchange area and larger heat exchange capacity.

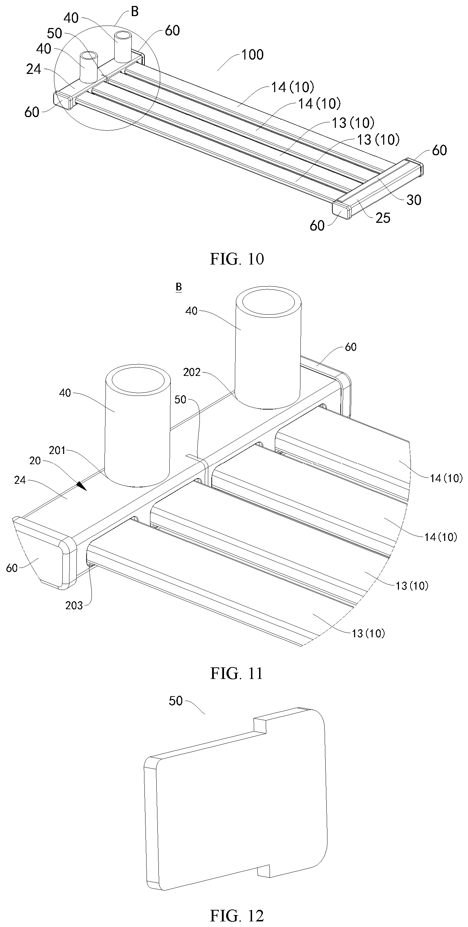

In some embodiments in which the first flow collecting component 24 integrates the inlet 201 and the outlet 202, as shown in FIG. 6 and FIGs. 10 to 13, FIG. 10 is a schematic diagram of part of the structure of a heat exchange member 100 according to some embodiments of the present application; FIG. 11 is an enlarged schematic structural diagram of the circled portion B in FIG. 10; FIG. 12 is a schematic structural diagram of a partition member 50 according to some embodiments of the present application; and FIG. 13 is a cross-sectional view of a heat exchange member 100 at a partition member 50 according to some embodiments of the present application. The first flow collecting component 24 is provided with a socket 204, and the heat exchange member 100 further includes a partition member 50. The partition member 50 is inserted into the socket 204, and the partition member 50 extends into the first flow collecting component 24 and partitions an inner space of the first flow collecting component 24 into an inflow channel and an outflow channel. The inlet 201 is in communication with the inflow channel, and the outlet 202 is in communication with the outflow channel.

By providing the partition member 50, the first flow collecting component 24 can be used for both liquid inlet and liquid outlet, and the processes of liquid inlet and liquid outlet do not interfere with each other. In addition, the partition member 50 is inserted into the first flow collecting component 24 via the socket 204, facilitating assembly. The socket 204 can further limit the partition member 50 at a fixed position, preventing the movement of the partition member 50 from affecting a space separation effect. By providing the partition member 50 for separation, the first flow collecting component 24 may not have a partition function, thereby exhibiting a simpler structure and making it easy to process and form.

In some specific embodiments, as shown in FIGs. 11 to 13, the socket 204 penetrates through the first side wall 21 in a first direction X, and is formed on a part of the second side wall 22 and the third side wall 23 in the first direction X. The partition member 50 is formed with two step surfaces, the peripheral edge of the partition member 50 is located in the socket 204, and the two step surfaces abut against the inner wall surfaces of the socket 204 on the second side wall 22 and the third side wall 23, respectively, to limit the size of the partition member 50 inserted into the socket 204. In addition, the partition member 50 may adopt a structure in which two side surfaces of the substrate 36 are covered with the solder layers 37, such that the solder layers 37 on the two sides may be in contact with and welded to the inner wall surfaces of two opposite sides of the socket 204, implementing sealing.

In some embodiments, as shown in FIG. 13, the reinforcing member 30 at least partially covers the socket 204. In this way, the reinforcing member 30 is capable of shielding the connection structure between the partition member 50 and the manifold 20 at the socket 204, reducing the risk of sealing failure at the junction. For example, it is difficult to provide the solder layers 37 at the step surfaces of the partition member 50, resulting in a weak seal. By covering the fitting between the step surfaces and the inner wall surfaces of the socket 204 by means of the reinforcing member 30, the risk of sealing failure here can be reduced.

According to some embodiments of the present application, as shown in FIGs. 3 to 6, two ends of the manifold 20 are provided with channel openings 205, the heat exchange member 100 further includes sealing covers 60, and the sealing covers 60 seal the channel openings 205.

The sealing cover 60 may be made of a high-temperature resistance non-metallic material, or may be made of aluminum alloy, copper, stainless steel, or the like. The sealing covers 60 and the manifold 20 may be sealed by a sealing member, welding, or the like, to reduce the risk of medium leakage. In addition, the sealing cover 60 may be a shield to enclose the end part of the manifold 20, and the sealing cover 60 may at least partially extend into the channel opening 205, provided that the sealing cover can seal the channel opening 205.

The two ends of the manifold 20 are provided with the channel openings 205, and the channel openings 205 are sealed by the sealing covers 60, such that the manifold 20 itself is generally formed into a hollow-through tubular structure, making it easier to form.

As shown in FIG. 2, the battery 1000 according to the embodiments of the present application includes the heat exchange member 100 according to the embodiments of the present application. Therefore, by adopting the above heat exchange member 100, the temperature regulation performance of the battery 1000 can be improved.

In some embodiments, as shown in FIGs. 2 and 16, the battery 1000 further includes a case assembly 300 and a battery assembly 200. The case assembly 300 includes a case body 310 integrally formed by stamping, and the case body 310 includes a bottom wall 311 and a surrounding wall 312. The battery assembly 200 is disposed in the case body 310, and the battery assembly 200 includes a plurality of battery cells 210. For example, the case body 310 may be made of a sheet metal material, and stamped into a basin shape to include the bottom wall 311 and the surrounding wall 312. Therefore, since the bottom wall 311 and the surrounding wall 312 of the case body 310 are integrally formed by stamping, no sealing consideration is required at the junction between the bottom wall 311 and the surrounding wall 312 while still ensuring the sealing effect. This can avoid the impact on the battery assembly 200 caused by muddy water infiltrating into the case body 310 from the junction between the bottom wall 311 and the surrounding wall 312, thereby improving the reliability of the battery 1000. Moreover, the case body 310 integrally formed by stamping does not need to be spliced, such that the production efficiency can be improved. The battery cells 210 may generate heat during operation, or the battery cells 210 need to be heated in a low-temperature environment to enable the battery cells 210 to be within an appropriate temperature range. By providing the heat exchange member 100, the temperature of the battery cells 210 can be adjusted, thereby improving the stability of the battery cells 210, and improving the endurance of the battery 1000.

In some embodiments of the present application, as shown in FIGs. 16 to 18, the battery 1000 includes a temperature adjustment member. The temperature adjustment member includes at least one of a first temperature adjustment member 110, a second temperature adjustment member 120, and a third temperature adjustment member 130, and at least one of the first temperature adjustment member 110, the second temperature adjustment member 120, and the third temperature adjustment member 130 includes the heat exchange member 100. The first temperature adjustment member 110 is disposed outside the case body 310 and attached to the outer wall of the case body 310. The second temperature adjustment member 120 is disposed in the case assembly 300 and disposed between the battery assembly 200 and the case assembly 300. The third temperature adjustment member 130 is disposed in the case assembly 300 and disposed between two adjacent battery cells 210.

For example, the battery 1000 may include only one of the first temperature adjustment member 110, the second temperature adjustment member 120, and the third temperature adjustment member 130, or may also include two of the first temperature adjustment member 110, the second temperature adjustment member 120, and the third temperature adjustment member 130, or may also include three of the first temperature adjustment member 110, the second temperature adjustment member 120, and the third temperature adjustment member 130. Therefore, based on actual situations, the temperature adjustment member may be disposed at a suitable position to meet the temperature adjustment requirements of the battery 1000.

The specific arrangement position of the first temperature adjustment member 110 outside the case body 310 is not limited. For example, with reference to FIG. 16, at least part of the first temperature adjustment member 110 may be disposed below the bottom wall 311 of the case body 310, thereby exchanging heat with the battery assembly 200 in a larger range, and improving a temperature adjustment effect on the battery assembly 200. For another example, at least part of the first temperature adjustment member 110 may also be disposed on the outer side of the surrounding wall 312 of the case body 310.

Illustratively, as shown in FIG. 16, the case assembly 300 may further include a bottom protective plate 340 disposed below the bottom wall 311 of the case body 310, to function to protect the case body 310 from impact or other damage. In this case, if the first temperature adjustment member 110 is disposed below the bottom wall 311 of the case body 310, the first temperature adjustment member 110 may be located between the bottom protective plate 340 and the bottom wall 311 of the case body 310, such that the bottom protective plate 340 may also function to protect the first temperature adjustment member 110.

The specific arrangement position of the second temperature adjustment member 120 in the case assembly 300 is not limited. For example, with reference to FIG. 16, at least part of the second temperature adjustment member 120 may be disposed above the bottom wall 311 of the case body 310, to be sandwiched between the bottom wall 311 of the case body 310 and the bottom of the battery assembly 200, thereby exchanging heat with the battery assembly 200 in a larger range, and improving the temperature adjustment effect on the battery assembly 200. For another example, at least part of the second temperature adjustment member 120 may be disposed below a case cover 320, to be sandwiched between the case cover 320 and the top of the battery assembly 200, thereby exchanging heat with the battery assembly 200 in a larger range, and improving the temperature adjustment effect on the battery assembly 200.

The specific arrangement position of the third temperature adjustment member 130 in the case assembly 300 is not limited. For example, with reference to FIG. 17, the adjacent battery cells 210 in the battery assembly 200 may have large surfaces opposite to each other. The third temperature adjustment member 130 is disposed between the large surfaces of the adjacent battery cells 210, which can improve the temperature adjustment effect on the battery cells 210.

Illustratively, with reference to FIG. 16, the temperature adjustment member may be of a flat tube structure, that is, the temperature adjustment member is formed in the form of a flat tube having a width greater than the thickness. A flow channel may be formed in the flat tube, and the heat exchange liquid may be introduced into the flow channel to exchange heat with the battery assembly 200, thereby achieving the temperature adjustment effect on the battery 1000.

Generally, the heat exchange member used in the battery is of a double-layer brazing plate structure, that is, formed by brazing two layers of plates, and a heat exchange flow channel is formed between the two layers of plates. In the present application, illustratively, the flat tube may be formed by splicing a plurality of segments of extruded tubes, and the thickness of the flat tube may be much less than the thickness of the double-layer brazing plate structure, thereby occupying less space, and improving the capacity of the battery 1000.

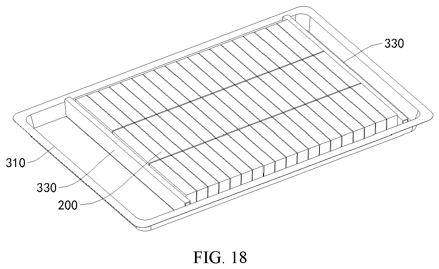

In addition, the thermal management system of the battery 1000 is not limited to only including the above temperature adjustment member. For example, in some embodiments, with reference to FIG. 18, the case assembly 300 may further include expansion beams 330 disposed in the case body 310. For example, a plurality of expansion beams 330 may be provided, and the battery assembly 200 is sandwiched between the plurality of expansion beams 330. For example, the case assembly may include a first expansion beam 330 and a second expansion beam 330, and the battery assembly 200 is sandwiched between the first expansion beam 330 and the second expansion beam 330. A heat exchange flow channel may be provided in the expansion beam 330 for temperature adjustment, thereby constituting a part of the thermal management system.

As shown in FIG. 1, the electric device according to the embodiments of the present application includes the battery 1000 according to the embodiments of the present application. The electric device may be any one of the aforementioned devices or systems that use the battery 1000. Because the performance of the battery 1000 is improved, the power performance of the electric device during operation can be improved.

A heat exchange member 100 according to a specific embodiment of the present application, and a battery 1000 and a vehicle 1 having the same are described below with reference to the drawings.

As shown in FIGs. 1 and 2, the vehicle 1 includes a battery 1000, and the battery 1000 includes a case assembly 300, and a battery assembly 200 and a heat exchange member 100 that are disposed in the case assembly 300. As shown in FIGs. 3 to 7, the heat exchange member 100 includes four connecting tubes 10, a manifold 20, and two reinforcing members 30. The connecting tube 10 is a straight tube extending in the first direction X, and a plurality of connecting tubes 10 are arranged side by side in the second direction Y, and formed by extrusion. The manifold 20 includes two flow collecting components formed by extrusion, i.e., a first flow collecting component 24 and a second flow collecting component 25; the manifold 20 further includes sealing covers 60 for welding and sealing the channel openings 205 at two ends of the flow collecting component in the second direction Y. The internal space of the second flow collecting component 25 is penetrated through in the second direction Y. A partition member 50 is inserted into the first flow collecting component 24, and the first flow collecting component is integrated with an inlet 201 and an outlet 202. A joint 40 is disposed at each of the inlet 201 and the outlet 202, such that the heat exchange member 100 forms a U-shaped flow path. Each of the first flow collecting component 24 and the second flow collecting component 25 is provided with four first openings 203.

The reinforcing member 30 disposed on the first flow collecting component 24 is denoted as a first reinforcing member. The first reinforcing member is formed by punching, and includes a first plate body 31, a second plate body 32, a third plate body 33, and mounting flanges 35; the first plate body 31 is provided with four second openings 301, an edge of the second opening 301 is provided with a connecting flange 34, the second plate body 32 is provided with hollow-through holes 302 opposite to the inlet 201 and the outlet 202, and the third plate body 33 is a continuously extending flat plate; and the first plate body 31, the third plate body 33, and the connecting flanges 34 are integrally formed, and the second plate body 32 and the mounting flanges 35 are integrally formed.

The reinforcing member 30 disposed on the second flow collecting component 25 is denoted as a second reinforcing member. The second reinforcing member is formed by punching, and includes a first plate body 31, a second plate body 32, and a third plate body 33; the first plate body 31 is provided with four second openings 301, an edge of the second opening 301 is provided with a connecting flange 34, the first plate body 31 and the third plate body 33 are both continuously extending flat plates, and the reinforcing member 30 is an integrated member.

Each of the first reinforcing member and the second reinforcing member includes a substrate 36 and a solder layer 37, and is formed into a double-sided composite solder. The first reinforcing member is welded to the outer surface of the first flow collecting component 24 and covers a socket 204, and the connecting flange 34 is inserted into the corresponding first opening 203. The second reinforcing member is welded to the outer surface of the second flow collecting component 25, and the connecting flange 34 is inserted into the corresponding first opening 203. The two ends of the connecting tube 10 are welded to the inner peripheral surfaces of the connecting flanges 34 of the first reinforcing member and the second reinforcing member, respectively.

Both the inner and outer side surfaces of the first reinforcing member and the second reinforcing member are provided with solder layers 37, the inner surface is welded to the manifold 20, and the outer surface is welded to the joint 40 and the connecting tube 10, such that the manifold 20 is not directly welded to the connecting tube 10. Even if the manifold 20 adopts a plate having a relatively small thickness, a connection area between the connecting tube 10 and the first opening 203 is not affected, or a connection area between the joint 40 and the inlet 201 and the outlet 202 is not affected, and thus the sealing reliability is not affected; and in addition, the thin plate makes the first opening 203, the inlet 201, and the outlet 202 easier to process and lowers the cost. The first reinforcing member and the second reinforcing member improve the structural strength of the manifold 20, and the thin plate can also make the manifold to exhibit good overall strength. The size of the joint 40 inserted into the first reinforcing member and the first flow collecting component 24 is 0.2 mm to 2 mm, facilitating hole expanding and riveting. The plate thickness of the first reinforcing member and the first flow collecting component 24 is 0.5 mm to 3 mm, and a double-layer structure formed here can reinforce the strength here. In addition, the second plate body 32 of the first reinforcing member covers the welding position of the partition member 50 and the first flow collecting component 24 at the socket 204, which can improve the welding quality.

In the above embodiments, the first reinforcing member and the second reinforcing member reinforce the strength of the manifold 20 and the strength of the welding position; the use of the connecting flange 34 increases the welding area of the connecting tube 10; the welding quality is ensured by enclosing the fitting between the partition member 50 and the socket 204 with the first reinforcing member; the first plate body 31 and the second plate body 32 are separate members, making it easy to improve the positional precision, and reducing the assembly difficulty and processing difficulty; and the first reinforcing member integrates the mounting flange 35, such that a mounting and positioning function is integrated, helping to reduce the number of components.

It should be noted that in the absence of conflicts, the embodiments and features in the embodiments in the present application may be combined with each other.

The above are only preferred embodiments of the present application, and are not intended to limit the present application. For those skilled in the art, the present application can be modified and varied. Any modification, equivalent substitution, improvement, and the like made within the spirit and principle of the present application shall all fall within the protection scope of the present application.

## Claims

1. A heat exchange member, comprising:
a plurality of connecting tubes, spaced apart from each other;
a manifold, provided with an inlet and an outlet, wherein the inlet is configured to input a medium, the outlet is configured to output the medium, the manifold is connected to and in communication with each of the connecting tubes, and the manifold and the plurality of connecting tubes jointly form a plurality of liquid flow paths arranged in parallel, each of the liquid flow paths flowing from the inlet to the outlet; and
a reinforcing member, disposed on the manifold and configured to reinforce a strength of the manifold.

2. The heat exchange member according to claim 1, wherein both the manifold and the connecting tube are connected to the reinforcing member.

3. The heat exchange member according to claim 1 or 2, wherein the reinforcing member is disposed outside the manifold, and at least part of the reinforcing member is attached to an outer surface of the manifold.

4. The heat exchange member according to any one of claims 1 to 3, wherein the manifold is provided with a first opening, the reinforcing member is provided with a second opening opposite to the first opening, a peripheral edge of the second opening is provided with a connecting flange, the connecting tube is provided in the first opening and the second opening in a penetrating manner, and the connecting tube is connected to an inner peripheral surface of the connecting flange.

5. The heat exchange member according to claim 4, wherein the connecting flange is provided in the first opening in a penetrating manner.

6. The heat exchange member according to claim 5, wherein an outer peripheral surface of the connecting flange is attached to a wall surface of the reinforcing member forming the first opening.

7. The heat exchange member according to any one of claims 4 to 6, wherein the connecting tube comprises a main body segment and a connecting segment connected to each other, in a direction perpendicular to a penetration direction of the second opening, a size of the connecting segment is smaller than a size of the main body segment, the connecting segment is provided in the first opening and the second opening in a penetrating manner, and an outer peripheral surface of the connecting segment is connected to the inner peripheral surface of the connecting flange.

8. The heat exchange member according to claim 7, wherein the main body segment abuts against a surface of the reinforcing member on a side facing away from the manifold.

9. The heat exchange member according to any one of claims 1 to 8, wherein a joint is disposed at the inlet and/or the outlet, the reinforcing member is provided with a hollow-through hole opposite to the inlet and/or the outlet, and the joint is provided in the hollow-through hole in a penetrating manner and in communication with the inlet or the outlet.

10. The heat exchange member according to claim 9, wherein an outer peripheral surface of the joint is provided with a first limiting protrusion, and the first limiting protrusion abuts against a side, facing away from the reinforcing member, of an edge of the inlet or the outlet; and/or
the outer peripheral surface of the joint is provided with a second limiting protrusion, and the second limiting protrusion abuts against a side, facing away from the manifold, of an edge of the hollow-through hole.

11. The heat exchange member according to claim 9 or 10, wherein the manifold is provided with a first side wall and a second side wall adjacent to each other, and the reinforcing member comprises a first plate body and a second plate body, wherein
the first side wall cooperates with the connecting tube and is attached to the first plate body, and the second side wall cooperates with the joint and is attached to the second plate body.

12. The heat exchange member according to claim 11, wherein the reinforcing member is an integrated member; or the first plate body and the second plate body are separate members.

13. The heat exchange member according to claim 11 or 12, wherein the reinforcing member further comprises a third plate body, the third plate body being connected to an edge of the first plate body distal to the second plate body, and the manifold is provided with a third side wall opposite to the second side wall, the third plate body being attached to the third side wall.

14. The heat exchange member according to any one of claims 1 to 13, wherein the reinforcing member is disposed outside the manifold and provided with a mounting flange extending away from the manifold, and the mounting flange is configured to mount the heat exchange member.

15. The heat exchange member according to any one of claims 1 to 14, wherein the manifold and/or the connecting tube is welded to the reinforcing member.

16. The heat exchange member according to claim 15, wherein the reinforcing member comprises a substrate and a solder layer disposed on a surface of the substrate, and the manifold and/or the connecting tube is welded to the solder layer.

17. The heat exchange member according to any one of claims 1 to 16, wherein the manifold comprises a first flow collecting component, the first flow collecting component is provided with the inlet and the outlet, the connecting tube is bent and extended, and two end parts of the connecting tube are both connected to the first flow collecting component, wherein one end part of the connecting tube is in communication with the inlet and the other end part of the connecting tube is in communication with the outlet to form one liquid flow path.

18. The heat exchange member according to any one of claims 1 to 16, wherein the manifold comprises a first flow collecting component and a second flow collecting component, two end parts of the connecting tube are connected to and in communication with the first flow collecting component and the second flow collecting component, respectively, and at least one of the first flow collecting component and the second flow collecting component is provided with the reinforcing member.

19. The heat exchange member according to claim 18, wherein the inlet and the outlet are disposed in the first flow collecting component, and at least the first flow collecting component is provided with the reinforcing member.

20. The heat exchange member according to claim 19, wherein structures of the reinforcing member disposed on the first flow collecting component and the reinforcing member disposed on the second flow collecting component are the same or different.

21. The heat exchange member according to claim 18, wherein the plurality of connecting tubes comprise a first connecting tube and a second connecting tube, a medium in the first connecting tube flows from the first flow collecting component to the second flow collecting component, a medium in the second connecting tube flows from the second flow collecting component to the first flow collecting component, a number of the first connecting tubes is equal to a number of the second connecting tubes, and the second flow collecting component is connected in series with the first connecting tube and the second connecting tube to form two liquid flow paths.

22. The heat exchange member according to claim 17 or 19, wherein the first flow collecting component is provided with a socket, the heat exchange member further comprises a partition member, the partition member is inserted into the socket, and the partition member extends into the first flow collecting component and partitions an inner space of the first flow collecting component into an inflow channel and an outflow channel, the inlet being in communication with the inflow channel, and the outlet being in communication with the outflow channel.

23. The heat exchange member according to claim 22, wherein the reinforcing member at least partially covers the socket.

24. The heat exchange member according to any one of claims 1 to 23, wherein two ends of the manifold are provided with channel openings, and the heat exchange member further comprises sealing covers, the sealing covers sealing the channel openings.

25. A battery, comprising:
the heat exchange member according to any one of claims 1 to 24.

26. The battery according to claim 25, further comprising:
a case assembly and a battery assembly, wherein the case assembly comprises a case body integrally formed by stamping, the case body comprises a bottom wall and a surrounding wall, the battery assembly is disposed in the case body, and the battery assembly comprises a plurality of battery cells.

27. The battery according to claim 26, wherein the battery comprises a temperature adjustment member, the temperature adjustment member comprises at least one of a first temperature adjustment member, a second temperature adjustment member, and a third temperature adjustment member, and at least one of the first temperature adjustment member, the second temperature adjustment member, and the third temperature adjustment member comprises the heat exchange member, wherein
the first temperature adjustment member is disposed outside the case body and attached to an outer wall of the case body;
the second temperature adjustment member is disposed in the case assembly and disposed between the battery assembly and the case assembly; and
the third temperature adjustment member is disposed in the case assembly and disposed between two adjacent battery cells.

28. An electric device, comprising the battery according to any one of claims 25 to 27.
